(19) Europäisches Patentamt
European Patent Office
Office européen des brevets

(11) **EP 4 703 776 A1**

(12) **EUROPEAN PATENT APPLICATION**
published in accordance with Art. 153(4) EPC

(43) Date of publication:
**04.03.2026 Bulletin 2026/10**

(51) International Patent Classification (IPC):
*G02B 1/10* (2015.01)          *G02B 5/00* (2006.01)
*G02F 1/13* (2006.01)

(21) Application number: **24795629.5**

(22) Date of filing: **12.03.2024**

(86) International application number:
**PCT/CN2024/081059**

(87) International publication number:
**WO 2024/222245 (31.10.2024 Gazette 2024/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **23.04.2023 CN 202310440219**

(71) Applicant: **Suzhou Crystalent Photonics Co., Ltd.
Suzhou, Jiangsu 215000 (CN)**

(72) Inventors:
• **LI, Tong**
  **Suzhou, Jiangsu 215000 (CN)**
• **WU, Peng**
  **Suzhou, Jiangsu 215000 (CN)**
• **LV, Linzhong**
  **Suzhou, Jiangsu 215000 (CN)**
• **CHEN, Xinyuan**
  **Suzhou, Jiangsu 215000 (CN)**

(74) Representative: **Kurig, Thomas
Becker Kurig & Partner
Patentanwälte mbB
Bavariastraße 7
80336 München (DE)**

(54) **VISUAL ANGLE CONTROL FILM AND PREPARATION METHOD THEREFOR**

(57)    A visual angle control film includes a transparent structure layer (200), wherein the transparent structure layer (200) includes a light-emitting plane and a light-entering micro-structure surface, a light control coating (300) is arranged on a surface of the light-entering micro-structure surface, a recess of the light-entering micro-structure surface is filled with an absorption material (400), a reflection layer (500) is arranged on an outer surface of the absorption material (400), an optical refractive index nH of the transparent structure layer (200) and an optical refractive index nL of the light control coating (300) satisfies: nH-nL>0.05.

FIG. 5

EP 4 703 776 A1

## Description

### Technical Field

The invention relates to an optical film, in particular to a visual angle control film and a preparation method therefor.

### Description of Related Art

With the rapid development of information technology, people can have access to a great deal of private or confidential information by different display devices, and to effectively protect business secrets and personal privacy, a visual angle control film is urgently needed. The visual angle control film allows users to use computers and mobile phones more freely in work, study, communication and entertainment and can prevent information on a screen from being divulged when senior business personnel, attorneys, consultants and financiers in a company use computers, thus avoiding business losses.

To improve such an effect, different technical solutions are adopted.

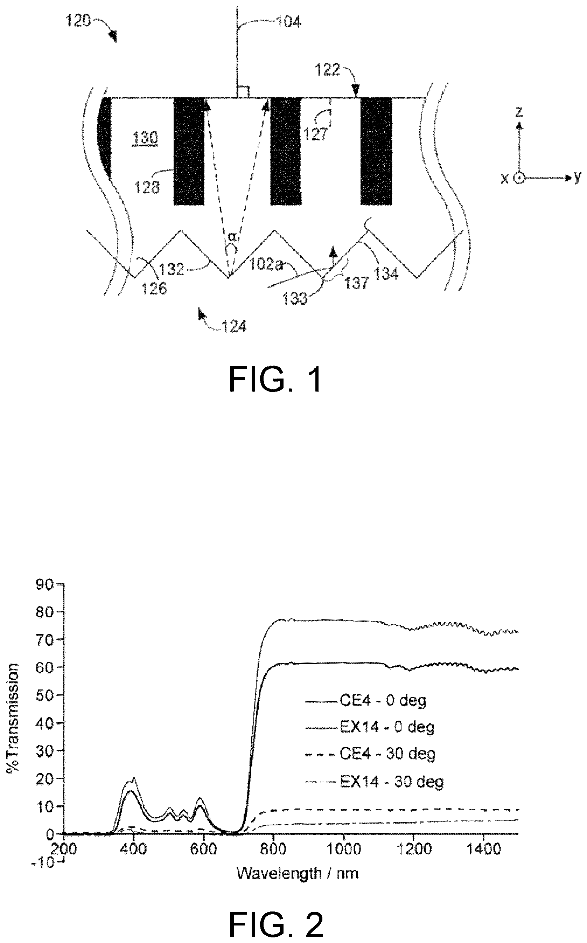

For example, US Patent Application Publication US20190346615A1 discloses a technical solution of visual angle control based on absorption, the structure of which is shown in FIG. 1. However, due to the presence of an absorption layer, the light transmittance is affected, and human eyes will capture less light from a screen attached with such a film as compared with a case where the screen not attached with the film even if users seen the screen from the front, which leads to low brightness of the screen and greatly compromises color and visual effects, thus affecting the eyesight of users and increasing power consumption of products.

Japanese Patent Application Publication No. JP2017138410A discloses a method for making a special visual angle control film, wherein as shown in FIG. 2. An absorption material, which has a certain light transmission property and satisfies a special transmittance requirement, is used to increase the light utilization rate by total reflection of the side wall of the structure. However, such a scheme cannot realize effective utilization of light directly entering the absorption material, and the use of the special material leads to a great difficulty in manufacturing and a high cost.

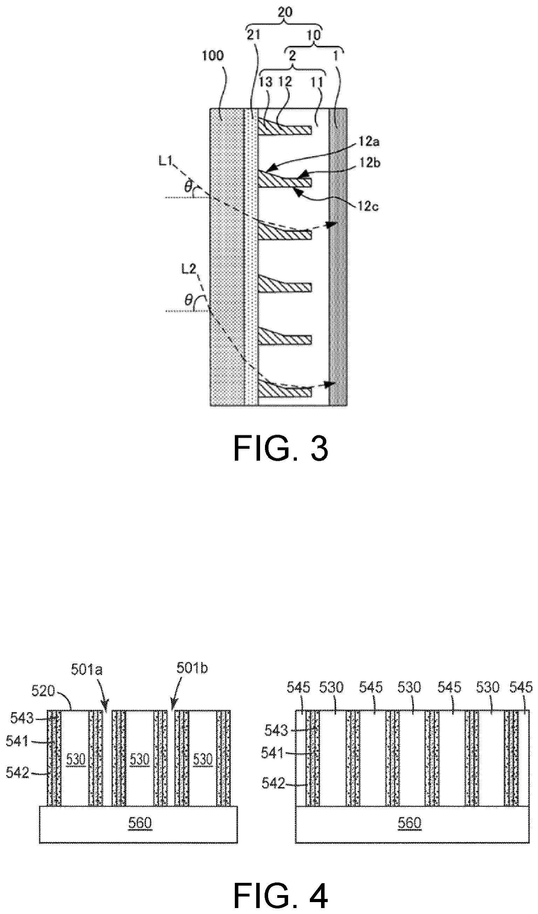

International Patent Application Publication No. WO2021130637A1 discloses a structure of a special light control film and a method for making the light control film, wherein the light angle is controlled by total reflection formed on a surface of a medium by a high-refractive index coating formed by optical coating, so as to increase the transmittance. Since no absorption layer is used, such that the utilization rate of light directly entering the film is higher. The structure is shown in FIG. 3. However, this technical solution has poor control over the viewing angle due to the absence of absorbing materials in the film material, no good cut-off angle, and light leakage from the viewing angle. At the same time, due to the high refractive index of the film layer, the material price is high.

International Patent Application Publication No. WO2020121112A1 discloses a method for increasing the transmittance, which as shown in FIG. 4. By changing the absorptivity of an absorption material, adopting surface coating and increasing the duty cycle of a light transmission unit, the product transmittance is improved, and the transmittance at 0 degree viewing angle is improved. Although such a technical solution can increase the optical transmittance within a certain wavelength range to 80%, the wavelength coverage is limited, which is not beneficial to the application to the full visible light band of a display system; moreover, because the absorption efficiency of the absorption material is reduced, the visual angle controllability is reduced accordingly.

### Brief Summary of the Invention

The technical issue to be solved by the invention is to provide a visual angle control film, which has a good visual angle controllability, a high light utilization rate and high efficiency and can save energy, and to provide a preparation method for the visual angle control film, which is high in production efficiency and low in cost.

One technical solution adopted by the invention to settle the above technical issue is as follows: a visual angle control film comprises a transparent structure layer, wherein the transparent structure layer comprises a light-emitting plane and a light-entering micro-structure surface, a light control coating is arranged on a surface of the light-entering micro-structure surface, a recess of the light-entering micro-structure surface is filled with an absorption material, a reflection layer is arranged on an outer surface of the absorption material, an optical refractive index of the transparent structure layer is $nH$, an optical refractive index of the light control coating is $nL$, and the optical refractive index $nH$ of the transparent structure layer and the optical refractive index $nL$ of the light control coating satisfies: $nH-nL>0.05$.

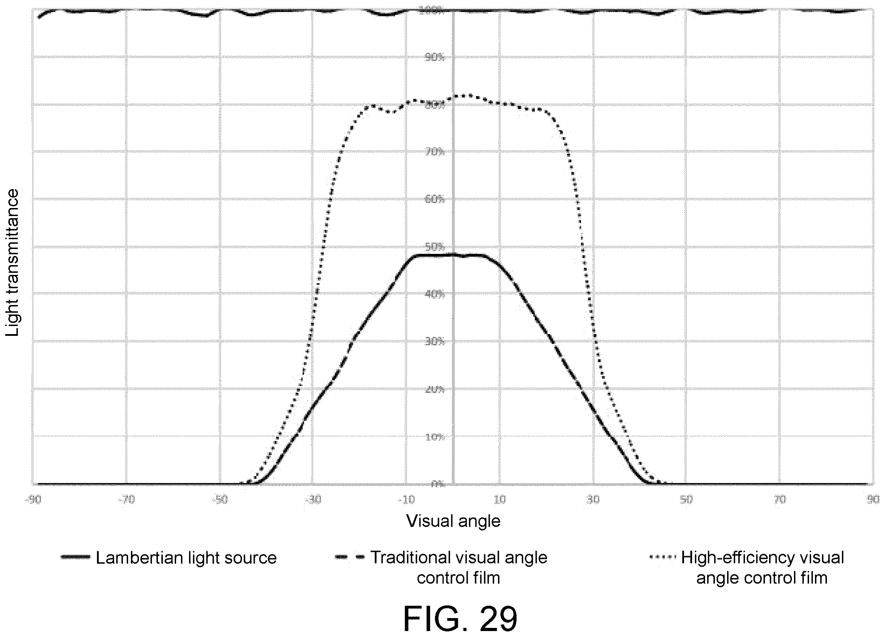

Compared with the prior art, the invention has the following advantages: based on the design principle of geometrical optics, through the combination of different materials and structures, it has an angle controlabilty on all spectrums of light within the visible light wavelength., a high full-spectrum visible light transmittance and a good visual angle controllability, and the light utilization rate is high are realized. By the unique design of the transparent structure layer and the light control coating and the special requirement for the refractive index of materials, optical alignment is realized, such that the transmittance of the film is improved. Due to the presence of the reflection layer, the light utilization rate is increased, and light directly entering a lower surface of a trapezoidal structure unit in the transparent structure layer is also effectively used, such that the overall transmittance of the film is further improved. Due to the presence of absorbent material, stray light is absorbed and restrained by the absorption material, and the visual angle of light is directly and further controlled, such that a good visual angle control is realized. It can be seen from FIG. 29 that, by comparison, the peak light transmittance of a typical Lambertian light source indicated by the solid line is 100%, and the visual angle is $\pm90°$; the visual angle of a traditional visual angle control film indicated by the dashed line is $\pm40°$, and the peak light transmittance is 50%; and the visual angle of the visual angle control film of the invention indicated by the dotted line is $\pm40°$, and the peak light transmittance reaches 80%.

Furthermore, a film substrate is arranged on the light-emitting plane of the transparent structure layer, and the transparent structure layer is applied and cured onto the film substrate.

Furthermore, a protective coating is arranged on the light-entering micro-structure surface of the transparent structure layer, and the protective coating is applied and cured onto the light control coating and the reflection layer.

Furthermore, an optical coating is arranged on an outer side of the protective coating, an optical refractive index of the protective coating is n6, and an optical refractive index of the optical coating is n7, and the optical refractive index n6 of the protective coating and the optical refractive index n7 of the optical coating satisfies: n6-n7>0.05. By the protective coating and the optical coating, the light utilization rate is further increased.

Furthermore, the protective coating is covered with the optical coating by a coating process.

Furthermore, the light-entering micro-structure surface is formed by a plurality of structure units, which are equidistantly and parallelly arranged and have an isosceles trapezoid-shaped cross-section, and the recess is an isosceles trapezoid-shaped groove located between two adjacent structure units.

Furthermore, a thickness of the light control coating is greater than or equal to 700 nm.

Furthermore, the thickness of the light control coating on two side surfaces of the isosceles trapezoid-shaped groove is the same, and the thickness of the light control coating on a bottom surface of the isosceles trapezoid-shaped groove is three times the thickness of the light control coating on the two side surfaces.

The other technical solution adopted by the invention to solve the above technical issue is as follows: a preparation method for the visual angle control film comprises the following steps:

Step 1, making a mold required for the transparent light structure, applying optical resin on a surface of the film substrate, and using the mold to form an optical entity by the film substrate and the transparent structure layer by a curing process;

Step 2, forming the light control coating on the surface of the transparent structure layer, controlling a thickness of the light control coating on two side surfaces of the isosceles trapezoid-shaped groove to be the same, and controlling a thickness of the light control coating on a bottom surface of the isosceles trapezoid-shaped groove to be three times the thickness of the light control coating on the two side surfaces;

Step 3, applying the absorption material onto the light control coating, filling the isosceles trapezoid-shaped groove with the absorption material, and curing the absorption material;

Step 4, covering a surface, formed by the absorption material and the light control coating, with a nanoscale-thickness seed layer capable of being decomposed under ultraviolet light, then irradiating the surface of the film substrate with ultraviolet light for exposure to produce a chemical reaction in an area, irradiated by the ultraviolet light, in the seed layer to remove the seed layer participating the reaction, and reserving the seed layer on a surface of the absorption material that is not irradiated by the ultraviolet light;

Step 5, plating the optical coating on a surface of the seed layer, and forming the reflection layer on the surface of the absorption material;

Step 6, applying optical resin onto a surface of the light control coating and a surface of the reflection layer, and forming the protective coating by the curing process; and

Step 7, covering a surface of the protective coating with the optical coating to form the complete high-efficiency visual angle control film.

The method provided by the invention is clear in process, continuous machining can be realized in all the steps by coiled materials, the production efficiency and mass production speed are high, the cost is low, and the preparation method is suitable for mass production. The preparation method does not require accurate alignment and special control units, and the production yield is high. All resin and materials used in the preparation method are common materials in the industry and do not need to be specially processed or originated, such that the raw material cost is greatly reduced. Compared with a traditional lithography process, in Step 4 of the preparation method provided by the invention, automatic alignment and exposure are realized by the optical properties of the structure, such that the requirement for the alignment accuracy in the lithography process is greatly reduced, and the process adopted in Step 4 has a higher production yield and can be better implemented. Compared with micro-machining or micro-coating, the lithography process adopted in Step 4 can greatly improve the production efficiency and greatly reduce the production cost.

Preferably, the preparation method specifically comprises the following steps:

Step 1, making a mold required for the transparent light structure, applying optical resin onto a surface of the film substrate by a UV coating process, and using the mold to form the optical entity by the film substrate and the transparent structure layer by a UV curing process;

Step 2, plating the light control coating on the surface of the transparent structure layer by an optical coating process, controlling a thickness of the light control coating on two side surfaces of the isosceles trapezoid-shaped groove to be the same and greater than or equal to 700 nm, and controlling a thickness of the light control coating on a bottom surface of the isosceles trapezoid-shaped groove to be three times the thickness of the light control coating on the two side surfaces;

Step 3, applying the absorption material onto the light control coating, filling the isosceles trapezoid-shaped groove with the absorption material, and curing the absorption material by the UV curing process;

Step 4, covering a surface, formed by the absorption material and the light control coating, with a nanoscale-thickness seed layer made from an electrically conductive photoresist, then irradiating the surface of the film substrate with ultraviolet light for exposure to produce a chemical reaction in an area, irradiated by the ultraviolet light, in the seed layer, cleaning the seed layer with an photoresist etchant, and reserving the seed layer on a surface of the absorption material that is not irradiated by the ultraviolet light;

Step 5, plating the optical coating on a surface of the seed layer by an electroplating process, and forming the reflection layer on the surface of the absorption material;

Step 6, applying optical resin onto a surface of the light control coating and a surface of the reflection layer by the UV coating process, and forming the protective coating by the UV curing process; and

Step 7, covering a surface of the protective coating with the optical coating by a coating process to form the complete high-efficiency visual angle control film.

## Brief Description of the Several Views of Drawings

FIG. 1 is a schematic diagram of a structure in the technical solution of Patent Publication No. US20190346615A1;

FIG. 2 is a schematic diagram of Patent Publication No. JP2017138410A;

FIG. 3 is a schematic diagram of Patent Publication No. WO2021130637A1;

FIG. 4 is a schematic diagram of Patent Publication No. WO2020121112A1;

FIG. 5 is a schematic diagram of a structure of the Embodiment 1 of the invention;

FIG. 6 is a schematic diagram of a structure of the Embodiment 2 of the invention;

FIG. 7 is a schematic diagram of a structure of the Embodiment 3 of the invention;

FIG. 8 is a schematic diagram of a structure of the Embodiment 4 of the invention;

FIG. 9 is a schematic diagram of a process result obtained by Step 1 of a preparation method for the structure in Embodiment 4 of the invention of the invention;

FIG. 10 is a schematic diagram of a process result obtained by Step 2 of the preparation method for the structure in Embodiment 4 of the invention of the invention;

FIG. 11 is a schematic diagram of a process result obtained by Step 3 of the preparation method for the structure in Embodiment 4 of the invention of the invention;

FIG. 12 is a schematic diagram of a result obtained after a seed layer is arranged in Step 4 of the preparation method for the structure in Embodiment 4 of the invention of the invention;

FIG. 13 is a schematic diagram of an exposure process in Step 4 of the preparation method for the structure in Embodiment 4 of the invention of the invention;

FIG. 14 is a schematic diagram of a process result obtained by Step 4 of the preparation method for the structure in Embodiment 4 of the invention of the invention;

FIG. 15 is a schematic diagram of a process result obtained by Step 5 of the preparation method for the structure in Embodiment 4 of the invention of the invention;

FIG. 16 is a schematic diagram of a process result obtained by Step 6 of the preparation method for the structure in Embodiment 4 of the invention of the invention;

FIG. 17 is a schematic diagram of a process result obtained by Step 7 of the preparation method for the structure in Embodiment 4 of the invention of the invention;

FIG. 18 is a schematic diagram of light propagation paths of a high-efficiency visual angle control film according to the invention;

FIG. 19 is a first optical principle schematic diagram of of light propagation of the high-efficiency visual angle control film according to the invention;

FIG. 20 is a second optical principle schematic diagram of of light propagation of the high-efficiency visual angle control film according to the invention;

FIG. 21 is a schematic structural diagram of different shapes of a groove of a light-entering micro-structure surface with respect to Embodiment 4;

FIG. 22 is a schematic structural diagram of different shapes of an absorption material and a reflection layer with respect to Embodiment 4;

FIG. 23 is a schematic structural diagram of different shapes of a contact surface between a reflection layer and contact layer of a protective coating with respect to Embodiment 4;

FIG. 24 is a schematic diagram of light propagation paths in a case where the groove of the light-entering micro-structure surface is triangular and the contact surface between the reflection layer and the protective coating is arc-shaped;

FIG. 25 is a schematic structural diagram of a special-shaped lower surface of a light control coating;

FIG. 26 is a schematic structural diagram of changes in shape of the light control coating and the absorption material;

FIG. 27 is a schematic structural diagram of changes in position of the light control coating and the absorption material;

FIG. 28 is a schematic diagram of a result obtained in a case where a reflection layer, an absorption material, a light control coating and a transparent structure layer are made in a sequence different from the sequence in the method of the invention;

FIG. 29 illustrates simulation experiment results of the high-efficiency visual angle control film in Embodiment 4 of the invention and an existing angle control film, wherein in case where the angle is controlled to be the same, the brightness of the film in the invention is obviously higher than that of the existing film, effectively indicating the feature of high-efficiency angle control of the film in the invention.

## Detailed Description of the Invention

The invention is described in further detail below in conjunction with accompanying drawings and embodiments.

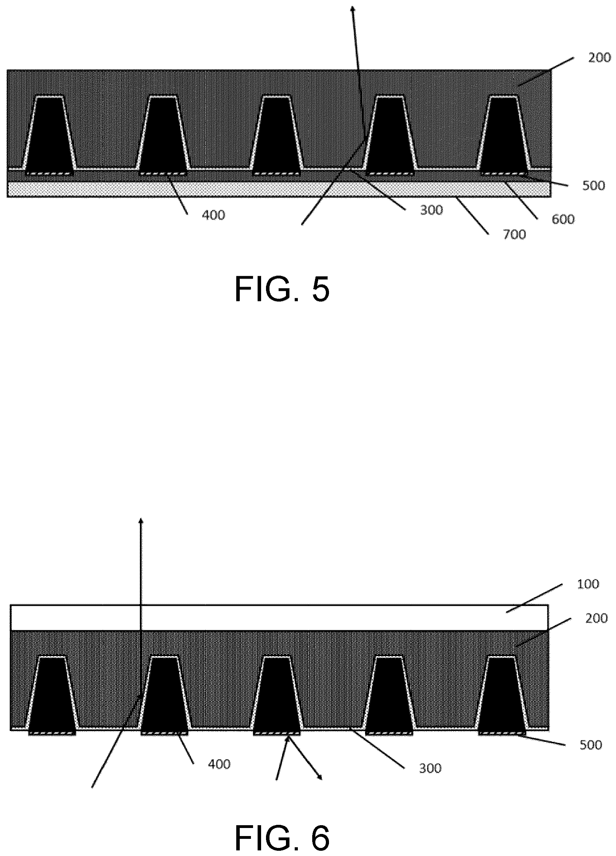

Embodiment 1: As shown in FIG. 5, a visual angle control film comprises a transparent structure layer 200, wherein the transparent structure layer 200 comprises a light-emitting plane and a light-entering micro-structure surface. The light-entering micro-structure surface is formed by a plurality of structure units, which are equidistantly and parallelly arranged and have an isosceles trapezoid-shaped cross-section. An isosceles trapezoid-shaped groove is arranged between every two adjacent structure units. A light control coating 300 a surface of the light-entering micro-structure surface. The isosceles trapezoid-shaped groove is filled with an absorption material 400. A reflection layer 500 is arranged on an outer surface of the absorption material 400. An optical refractive index of the transparent structure layer 200 is nH, an optical refractive index of the light control coating 300 is nL, and satisfy the relation: nH-nL>0.05.

Embodiment 2: As shown in FIG. 6, the structure is essentially the same as Embodiment 1 and is different from Embodiment 1 in that a film substrate 100 is arranged on the light-emitting plane of the transparent structure layer 200, and the transparent structure layer 200 is applied and cured onto the film substrate 100.

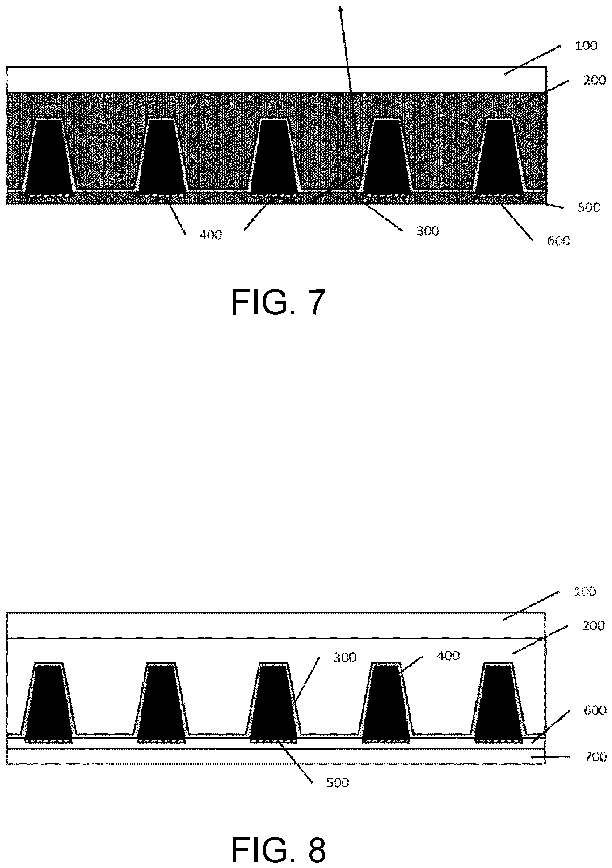

Embodiment 3: As shown in FIG. 7, the structure is essentially the same as Embodiment 2 and is different from Embodiment 2 in that a protective coating 600 is arranged on the light-entering micro-structure surface of the transparent structure layer 200, and the protective coating 600 is applied and cured onto the light control coating 300 and the reflection layer 500.

Embodiment 4: As shown in FIG. 8, the structure is essentially the same as Embodiment 3 and is different from Embodiment 3 in that an optical coating 700 is arranged on an outer side of the protective coating 600, the optical coating 700 covers the protective coating 600 by a coating process, an optical refractive index of the protective coating 600 is n6, an optical refractive index of the optical coating 700 is n7, and satisfy the relation: n6-n7>0.05.

For example, as shown in FIG. 8, a high-efficiency visual angle control film in Embodiment 4 is mainly formed by seven parts, including a film substrate 100, a transparent structure layer 200, an optical control coating 300, an absorption material 400, a reflection layer 500, a protective coating 600 and an optical coating 700. Wherein, the film substrate 100 is a film substrate material, is required to have a good optical transmittance and good surface properties, can be tightly attached to the transparent structure layer 200, and is generally optical plastic such as PET, PC or PMMA. The transparent structure layer 200 has a specially designed light-entering micro-structure surface and is required to have a good optical transmittance and a special refractive index, and the light-entering micro-structure surface of the transparent structure layer 200 is made by UV coating, machining, nanoimprinting, hot pressing or other processes, and is generally made from optical resin or plastic such as PMMA, PC or PI. The light control coating 300 is an optical film coating for controlling the propagation direction of light, is required to have a special refractive index, and can be well attached to the transparent structure layer 200. The absorption material 400 is a stray light absorption coating, is required to have a high absorption coefficient, can absorb light in a short distance, may be made by UV coating, hot coating or other processes, and is generally black ink, black resin or the like. The reflection layer 500 is an optical reflection film, is required to have a good optical specular reflection or diffuse reflection property, and has a high reflective index. The protective coating 600 is an optical resin coating and mainly used for protecting the reflection layer from being damaged. The optical coating 700 is a coating arranged for a subsequent process, the material of the optical coating can be changed according to the subsequent process, and the optical coating is generally made from OCA, PI, PDMS or the like. The protective coating 600 and the optical coating 700 form a special optical structure to improve the efficiency of the film.

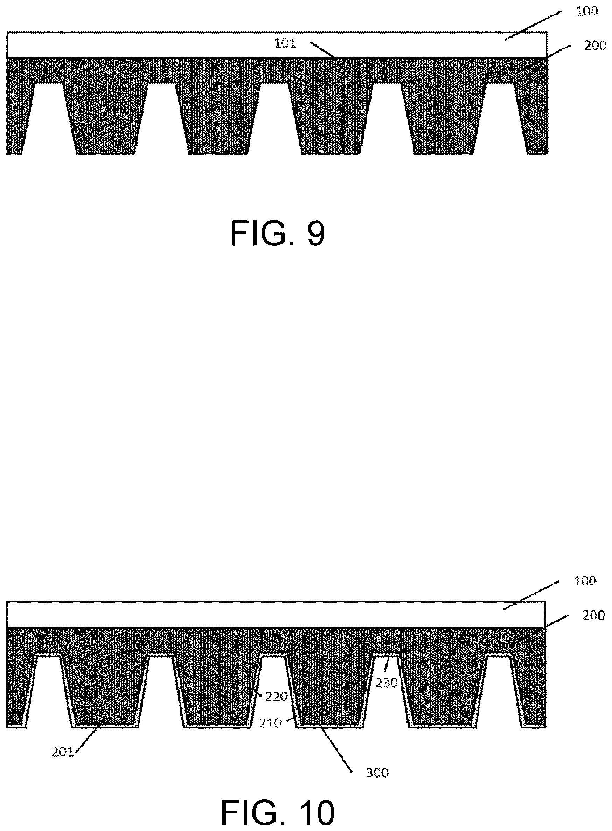

As shown in FIGS. 9-17, the visual angle control film in Embodiment 4 is prepared by a method below. The method specifically comprises the following steps:

Step 1, a mold required for the transparent structure layer 200 is made by machining, optical resin is applied onto a surface 101 of the film substrate 100 by a UV coating process, and an optical entity is formed by the film substrate 100 and the transparent structure layer 200 by the mold by a UV curing process, as shown in FIG. 9.

Step 2, the light control coating 300 is plated on a surface 201 of the transparent structure layer 200 by an optical plating process. The thickness of the light control coating 300 on two side surfaces 210 and 220 of an isosceles trapezoid-shaped groove is controlled to be the same and 700 nm, and the thickness of the light control coating 300 on a bottom surface 230 of the isosceles trapezoid-shaped groove is 2200 nm, as shown in FIG. 10.

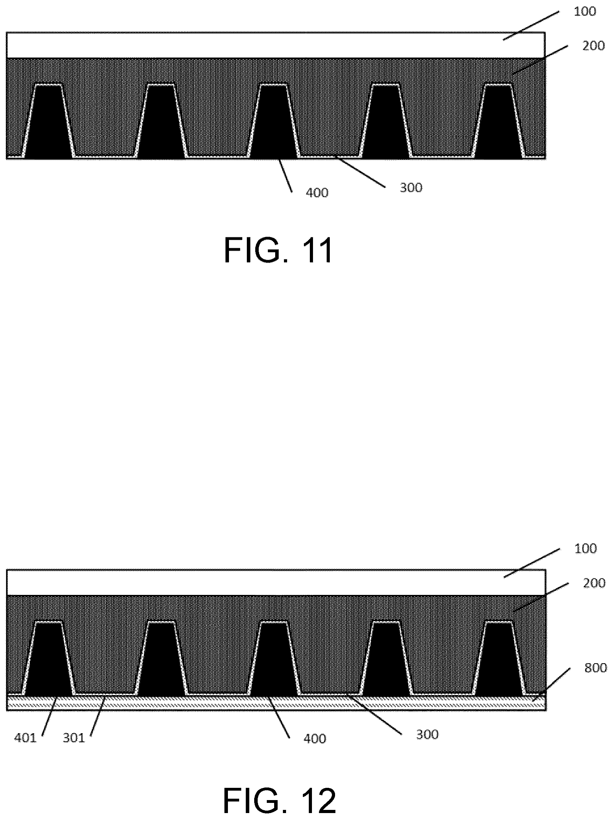

Step 3, the absorption material 400 is applied onto the light control coating 300, filled in the isosceles trapezoid-shaped groove, and cured by the UV curing process, as shown in FIG. 11.

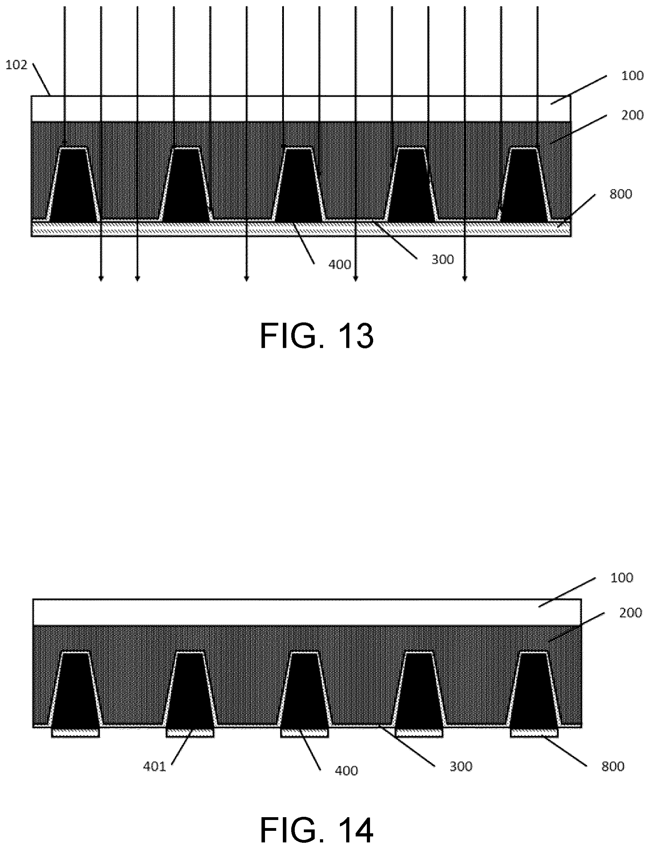

Step 4, a surface formed by a surface 401 of the absorption material 400 and a surface 301 of the light control coating 300 is covered with a nanoscale-thickness seed layer 800, which is made from an electrically conductive photoresist, as shown in FIG. 12. Then, a surface 102 of the film substrate 100 is irradiated with ultraviolet light for exposure, wherein due to the presence of the absorption material 400, part of the ultraviolet light enters the seed layer 800, and a chemical reaction occurs in an area that is irradiated by the ultraviolet light. At the same time, the other part of the ultraviolet light does not enter the seed layer 800 under the action of the absorption material 400, and no chemical reaction will occur in an area that is not irradiated by the ultraviolet light, as shown in FIG. 13. Finally, the seed layer 800 is cleaned with an photoresist etchant, and only the seed layer 800 on the surface 401 of the absorption material 400 is reserved, as shown in FIG. 14.

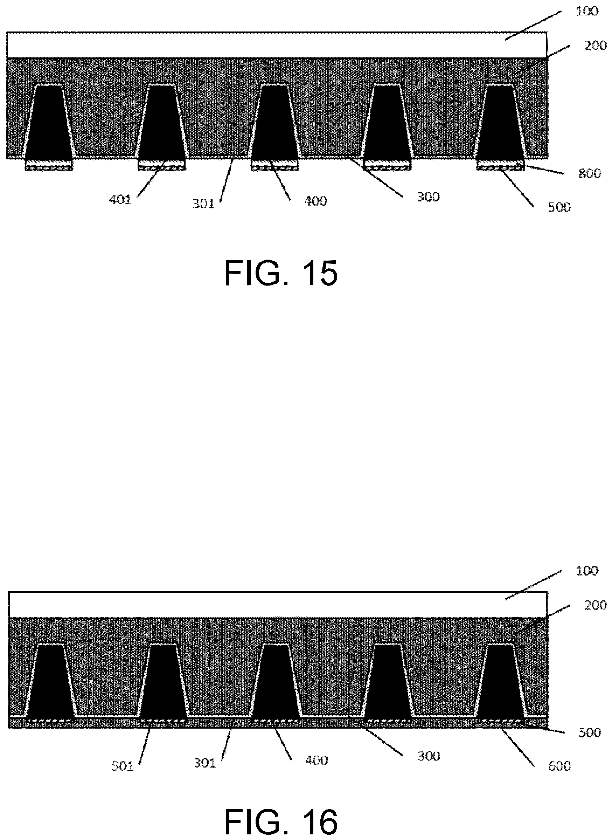

Step 5, an optical coating is plated on a surface of the seed layer 800 by an electroplating process, the surface 401 of the reserved absorption material 400 exists reflection layer 500, and the surface 301 of the light control coating is not provided with the reflection layer 500, as shown in FIG. 15.

Step 6, optical resin is applied onto the surface 301 of the light control coating 300 and a surface 501 of the reflection layer 500 by the UV coating process, and the protective coating 600 is finally formed by the UV curing process, as shown in FIG. 16.

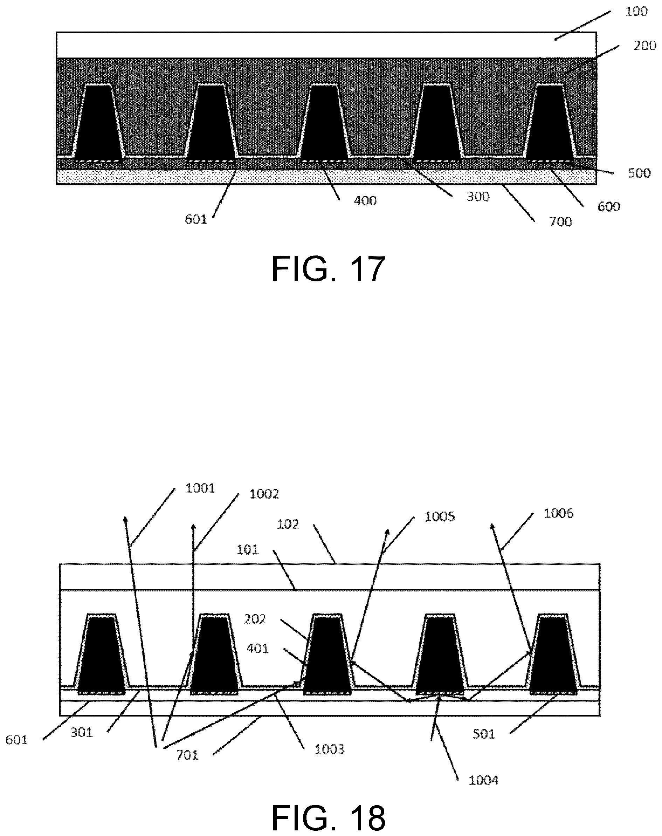

Step 7, a surface 601 of the protective coating 600 is covered with the optical coating 700 by a coating process, such that the complete high-efficiency visual angle control film is finally formed, as shown in FIG. 17.

For light entering the high-efficiency visual angle control film at different angles, different optical paths will be formed in the structure of the film to fulfill the purpose of visual angle control. As shown in FIG. 18, light 1001 enters the optical coating 700 from the surface 701, then enters the protective coating 600 by the surface 601, then enters the light control coating 300 by the surface 301 to further enter the transparent structure layer 200 or directly enters the transparent structure layer 200, continues to propagate in the transparent structure layer 200 to enter the film substrate 100 by the surface 101, and is finally emitted from the surface 102. At the same time, light 1002 enters the optical coating 700 from the surface 701, then enters the protective coating 600 by the surface 601, then enters the light control coating 300 by the surface 301 to further enter the transparent structure layer 200 or directly enters the transparent structure layer 200, and continues to propagate in the transparent structure layer 200 to reach the surface 202, and the light 1002 is totally reflected on the surface 202, continues to propagate in the transparent structure layer 200 until entering the film substrate 100 by the surface 101, and is finally emitted from the surface 102. Stray light 1003 enters the optical coating 700 from the surface 701, then enters the protective coating 600 by the surface 601, then enters the light control coating 300 by the surface 301 to further enter the transparent structure layer 200 or directly enters the transparent structure layer 200, and continues to propagates in the transparent structure layer 200 to reach the surface 202. Because the light 1003 does not satisfy the total reflection condition on the surface 202, it will not be totally reflected. Light 1003 enters the light control coating 300 from the surface 202 and then enters the absorption material 400. Energy of the light 1003 is absorbed by the absorption material 400 during the transporting process in the absorption material, until the light 1003 is emitted from the absorption material 400 or disappears. Similarly, light 1004 enters the optical coating 700 from the surface 701, then enters the protective coating 600 by the surface 601. When in the proactive coating 600, light 1004 propagates from the protective coating 600 to the surface 501 of the reflection layer 500, light 1004 is reflected or diffusely reflected on the surface 501 to turn into light 1006 and light 1006. When light 1005 and light 1006 propagating to the surface 601, there is a probability that the light 1005 and the light 1006 being totally reflected because of the optical refractive index set between the protective coating 600 and the optical coating 700, and the light continue to propagate in the protective coating 600 to enter the light control coating 300 by the surface 301 to further enter the transparent structure layer 200 or directly enter the transparent structure layer 200, and continue to propagate in the transparent structure layer 200 to reach the surface 202, then light 1002 is totally reflected on the surface 202, and then continue to propagate in the transparent structure layer 200 to enter the film substrate 100 by the surface 101, and are finally emitted from the surface 102.

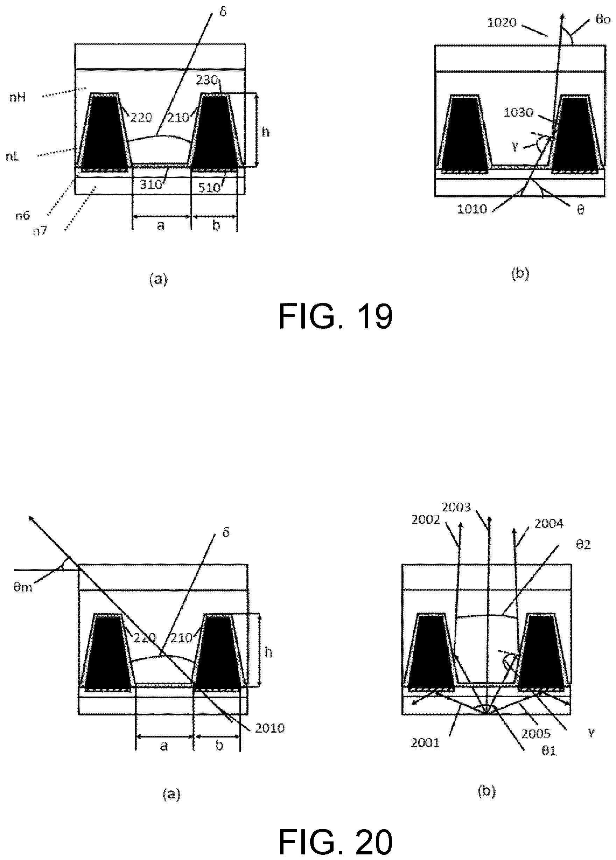

As shown in FIG. 19(a), the optical refractive index of the material of the transparent structure layer 200 is nH, the optical refractive index of the material of the light control coating 300 is nL, the optical refractive index of the material of the protective coating 600 is n6, and the optical refractive index of the material of the optical coating 700 is n7. An angle between the right surface 210 and the left surface 220 of the trapezoidal structure unit in the transparent structure layer 200 is $\delta$. The size of a lower surface of the trapezoidal structure unit in the transparent structure layer 200 (a lower surface 310 of the light control coating 300) is a. The size of the surface 510 of the reflection layer 500 (the distance between the lower surfaces of the trapezoidal structure units in the transparent structure layer 200 and also the size of a lower surface of the absorption material 400) is b. The distance of an upper surface of the trapezoidal structure unit in the transparent structure layer 200 (the height between an upper surface 230 of the light control coating 300 and the lower surface 310) is h.

To satisfy optical design requirements, the refractive indexes of the above materials should satisfy the following relations:

$$nH\text{-}nL > 0.05$$

$$n6\text{-}n7 > 0.05$$

As shown in FIG. 19(b), there is a light 1010 in the optical coating 700, which an angle between the light 1010 and the horizontal is $\theta$, the light enters the transparent structure layer 200 by the surface 301 and continues to propagate in the transparent structure layer 200 to reach the surface 210, and an angle between the light 101 and a normal of the surface 210 is $\gamma$. With reference to the above information, an optical total reflection angle $\gamma r$ of the surface 210 is:

$$\gamma r = \sin^{-1}\frac{nL}{nH}$$

if $\gamma \geq \gamma r$, the light 1010 will be totally reflected on the surface 210 and turn into light 1020. If the light 1020 enters the film substrate 100 by the surface 101 and is finally emitted from the surface 102, an angle $\theta o$ between the light 1020 and the horizontal direction is:

$$\theta o = 180 - \delta - \theta$$

If the light 1020 continues to propagate in the transparent light structure 200 to the surface 220, the light 1020 is totally reflected on the surface 220, then further propagates to enter the film substrate 100 by the surface 101 and is finally emitted from the surface 102. An angle $\theta o$ between the light 1020 and the horizontal direction is:

$$\theta o' = 180 - \frac{\delta}{2} - \theta$$

From the above formulas, $|90 - \theta o| \geq |90 - \theta o'|$, that is, the light 1020 emitted at the angle $\theta o'$ is closer to be emitted vertically, so the light 1020 emitted at the angle $\theta o$ should be taken into account when determining the range of visual angle control.

If $\gamma < \gamma r$, the light 1010 will be transmitted here and turn into light 1030, which enters the light control coating 300 and is finally enters the absorption material 400 until energy of the light 1030 is completely absorbed by the absorption material 400.

As shown in FIG. 20(a), an angle between light 2010 in the optical coating 700 and the horizontal direction is $\theta m$, the light 2010 enters the transparent structure 200 by the surface 301, then enters the film substrate 100 by the surface 101 rather than propagating to the surface 10 and the surface 220, and is finally emitted from the surface 102 at a maximum angle $\theta m$:

$$\theta m = \tan^{-1} \frac{h}{a + h * \tan \frac{\delta}{2}}$$

If θm≥θo, a relation between the angle δ, a and h is:

$$a * \tan \delta + h * \tan \delta * \tan \frac{\delta}{2} + a * \tan \theta + h * \tan \theta * \tan \frac{\delta}{2} - h * \tan \delta * \tan \theta + h \leq 0$$

If θm<θo, a relation between the angle δ, a and h is:

$$a * \tan \delta + h * \tan \delta * \tan \frac{\delta}{2} + a * \tan \theta + h * \tan \theta * \tan \frac{\delta}{2} - h * \tan \delta * \tan \theta + h > 0$$

As shown in FIG. 20(b), in a case where there is a beam of light with a irradiation angle, the irradiation angle is an angle θ1 between light 2001 and light 2005, to fulfill an angle controllability, the angle δ between the right surface 210 and the left surface 220 should satisfy:

$$\delta < 180 - 2\theta 1 \ \text{ or } \ \delta > 2 \tan^{-1} \frac{h-a}{h * \tan \theta 1}$$

Therefore, to ensure that the film has a visual angle controllability, the angle δ between the right surface 210 and the left surface 220 of the trapezoidal structure unit in the transparent structure layer 200, the size a of the lower surface of the trapezoidal structure unit in the transparent structure layer 200 and the height h between the upper surface 230 and the lower surface 310 should satisfy the above relation. It can be understand that if light 2001, light 2002, light 2003, light 2004 and light 2005 enter the film at an angle θ1, and emit from the film at an angle θ2, the angle θ2 should satisfy the following relations:

$$\theta 2 \leq \theta m < \theta 1, \ \theta m \geq \theta o$$

$$\theta 2 \leq \theta o < \theta 1, \ \theta m < \theta o$$

It is clear that θ2<θ1, that is, the film has a visual angle controllability.

When propagating to the surface 501 of the reflection layer 500, the light 2001 and the light 2005 are respectively reflected or diffusely reflected on the surface 501, and then continue to propagate in the protective coating 600; when propagating to the surface 601, the light 2001 and the light 2005 are probably totally reflected due to the optical design between the protective coating 600 and the optical coating 700, continue to propagate in the protective coating 600 to enter the light control coating 300 by the surface 301 to further enter the transparent coating layer 200 or directly enter the transparent structure layer 200, further propagate in the transparent structure layer 200 to reach the surface 202, are totally reflected on the surface 202, then further propagate in the transparent structure layer 200 to enter the film substrate 100 by the surface 101, and are finally emitted from the surface 102, and the visual angle of the emitted light can also be controlled, such that the overall utilization rate of light is increased. The light 2001, the light 2002, the light 2003, the light 2004 and the light 2005 are all probably emitted from the surface 102.

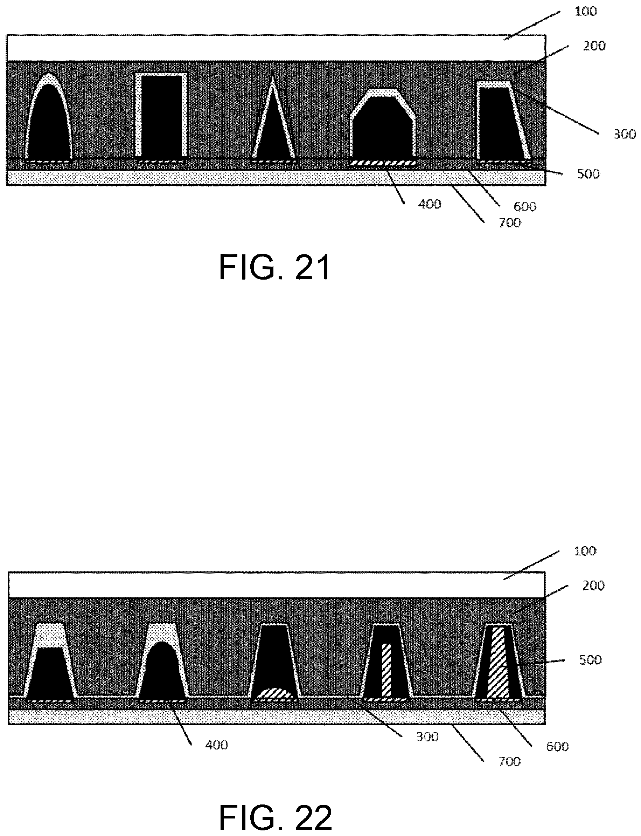

In this invention, the groove of the light-entering micro-structure of the transparent structure layer 200 may be in the shape of a circular or elliptical lens, a square, a triangle, a polygon or a single edge of these shapes, as shown in FIG. 21.

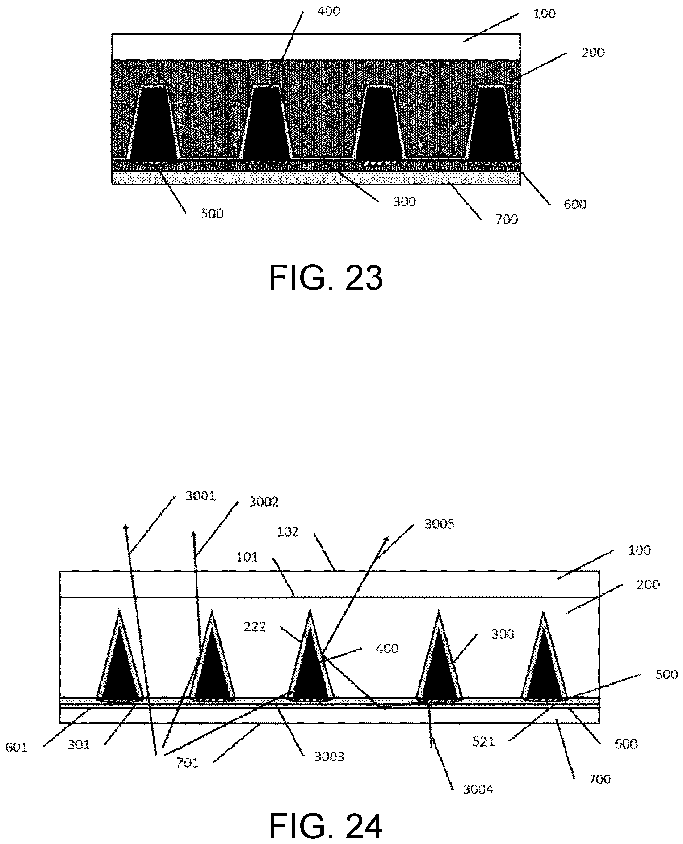

The shape of the light control coating 300 and the absorption material 400 can be changed. Because the angle between stray light and the horizontal direction is small and the surface where light entering the transparent structure layer 200 and the light control coating 300 is totally reflected is a contact surface between the transparent structure layer 200 and the light control coating 300, the groove of the light-entering micro-structure surface of the light transparent structure layer 200 does not need to be fully filled with the absorption material. Because light will be reflected only on a contact surface between the reflection layer 500 and the protective coating 600, the surface of the absorption material 400 does not need to cover a whole screen, the interior of the reflection layer 500 may be arc, rectangular, trapezoidal or in any other shapes, as shown in FIG. 22. In addition, because light will be reflected only on the contact surface between the reflection layer 500 and the protective coating 600, the contact surface between the reflection layer 500 and the protective coating 600 does not need to be a plane and may be an arc surface, a triangular surface, a non-regular surface or even a diffuse reflection particle surface, as shown in FIG. 23. Because the shape of the reflection layer 500 is closely related to the shape of the seed layer 800, the shape of the contact surface between the reflection layer 500 and the protective coating 600 can be controlled only by controlling the surface shape of the seed layer 800 when the seed layer 800 is applied. The design of the nonplanar reflection layer 500 is more beneficial to the change of the light angle and can increase the light utilization rate and further improve optical efficiency.

As shown in FIG. 24, for example, in a case where the groove of the light-entering micro-structure surface of the transparent structure layer 200 is triangular and the contact surface between the reflection layer 500 and the protective coating 600 is arc-shaped, light 3001 enters the optical coating 700 from the surface 701, then enters the protective coating 600 by the surface 601, then enters the light control coating 300 by the surface 301 to enter the transparent structure layer 200 or directly enters the transparent structure layer 200, continue to propagate in the transparent structure layer 200 to enter the film substrate 100 by the surface 101, and is finally emitted from the surface 102. Light 3002 enters the optical coating 700 from the surface 301, then enters the protective coating 600 by the surface 601, then enters the light control coating 300 by the surface 301 to enter the transparent structure layer 200 or directly enters the transparent structure layer 200, continues to propagate in the transparent structure layer 200 to reach the surface 222, is totally reflected on the surface 222, further propagates in the transparent structure layer 200 to enter the film substrate 100 by the surface 101, and is finally emitted from the surface 102. Stray light 3003 enters the optical coating 700 from the surface 701, then enters the protective coating 600 by the surface 601, then enters the light control coating 300 by the surface 301 to enter the transparent structure layer 200 or directly enters the transparent structure layer 200, and continues to propagate in the transparent structure layer 200 to reach the surface 222; the light 3003 does not satisfy the total reflection condition on the surface 222, so it will not be totally reflected; the light 3003 enters the light control coating 300 by the surface 222 and then enters the absorption material 400, and when the light 3003 propagates in the absorption material 400, energy of the light 3003 will be absorbed by the absorption material 400 until the light 3003 is emitted or disappears. Similarly, light 3004 enters the optical coating 700 from the surface 701, then enters the protective coating 600 by the surface 601, propagates in the protective coating 600 to reach the surface 521 of the reflection layer 500, and is reflected on the surface 521. Because the surface 521 is an arc surface, the propagation path of the light 3004 is changed, and the light 3004 turns into light 3005. When light 3005 propagating to the surface 601, there is a probability that the light 3005 being totally reflected because of the optical design between the protective coating 600 and the optical coating 700, and the light continues to propagate in the protective coating 600, then enters the light control coating 300 by the surface 301 to further enter the transparent structure layer 200 or directly enter the transparent structure layer 200, continues to propagate in the transparent structure layer 200 to reach the surface 222, totally reflected on the surface 222, and then further propagates in the transparent structure layer 200 to enter the film substrate 100 by the surface 101, and is finally emitted from the surface 102.

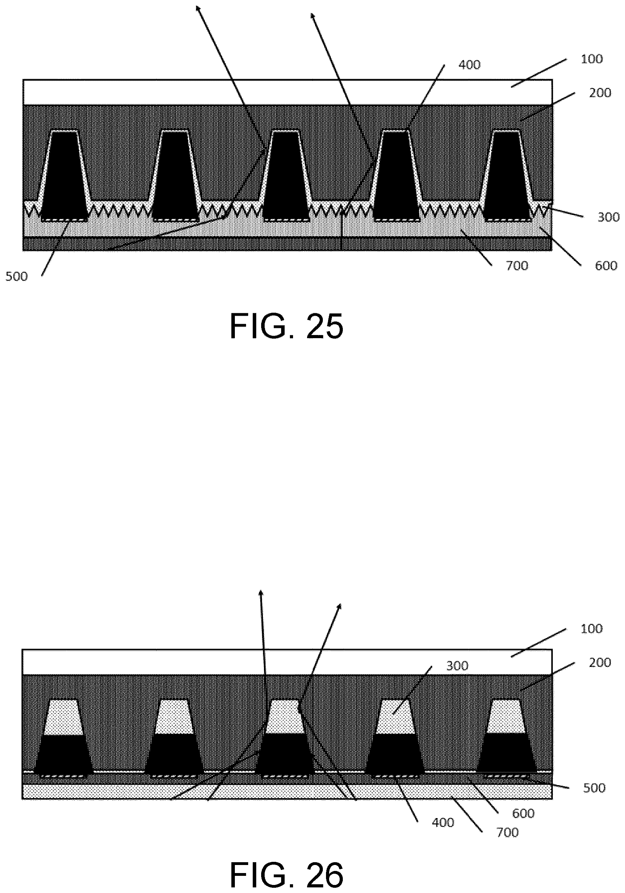

According to different preparation methods, after Step 2 is completed, surface machining may be performed to make the lower surface of the light control coating to be in a special shape such as a triangular shape, and then the subsequent process is performed, as shown in FIG. 25. For example, the lower surface of the light control coating is triangular. Because of the difference in refractive index between the light control coating 300 and the protective coating 600, an optical change such as refraction or reflection of light can be realized on the contact surface between the light control coating 300 and the protective coating 600 to fulfill the purpose of controlling light energy and angle.

According to different cost requirements and design requirements, the protective coating 600 and the optical coating 700 of the high-efficiency angle control film may be removed, as shown in FIG. 6, wherein the efficiency of the film is slightly reduced, but it is still higher than that of traditional angle control films, and the film still has a good angle controllability. According to different subsequent applications and design requirements, the optical coating 700 of the high-efficiency angle control film may be removed, as shown in FIG. 7. A total reflection optical channel may be formed by the protective coating 600 and air to improve the overall optical efficiency, but full lamination cannot be realized, and a subsequent coating process is needed. According to different materials of the transparent structure layer or different processes, the film substrate 100 of the high-efficiency angle control film may be removed, as shown in FIG. 5.

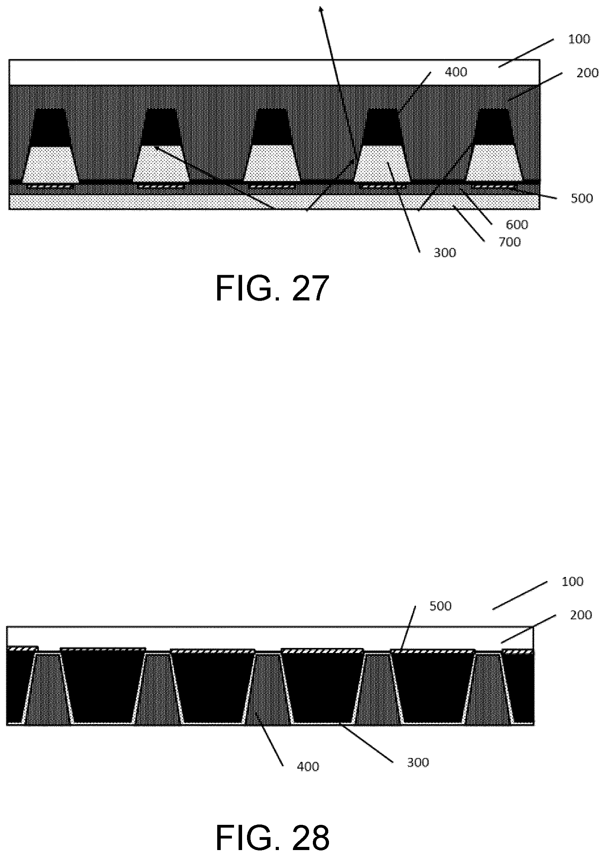

According to different design requirements, the shape of the light control coating 300 and the absorption material 400 may be changed, as shown in FIG. 26, and such a change will only affect the visual angle controllability and efficiency of some light. According to different light angles brightness distributions, the position of the light control coating 300 and the position of the absorption material 400 may be changed, as shown in FIG. 27, and in this case, the visual angle of light can still be controlled, and even a regional controllability can be realized.

In Step 1, the transparent structure layer 200 may be made by hot pressing, machining, lithography or the like as long as a transparent optical material can be made in a design shape. In Step 2, the light control coating 300 may be made by evaporation, sputtering, spraying or the like as long as the light control coating 300 is formed on the surface 201 of the transparent structure layer 200 and the thickness of the coating 300 satisfies the design requirement. In Step 3, the absorption material 300 may be cured by hot curing, chemical curing or the like.

In Step 4, the seed layer 800 may be made from a chemical reagent with a special surface polarity such as N-methylpyrrolidone, and can be decomposed under ultraviolet light, such the seed layer 800 can also be in the design shape after being exposed, as shown in FIG. 14. Then, in Step 5, by the difference in surface polarity between the material of the seed layer 800 and the material of the light control coating 300, the special reagent is only adsorbed onto the surface of the seed layer 800, such that the reflection layer 500 is finally formed on the surface of the seed layer 800 by chemical coating, as shown in FIG. 15. Or, the seed layer 800 is made from a photodissociative catalyst, such that the seed layer 800 can still be in the design shape after being exposed, as shown in FIG. 14. Then, in Step 5, the reflection layer 500 is finally formed on the surface of the seed layer 800 by chemical self-assembly by the catalytic property of the seed layer 800, as shown in FIG. 15.

In Step 6, the protective coating 600 may be made by coating, spraying or the like as long as the property of an optical material satisfies design requirements. In Step 7, the optical coating 700 may be made by spraying, UV coating, hot coating or the like as long as the property of an optical material satisfies design requirements.

In a case where a high-precision alignment process such as lithography is used, the reflection layer 500 and the absorption material 400 may be made first, then the light control coating 300 and the transparent structure layer 200 are made, and in this case, the same effect can be realized, as shown in FIG. 28.

## Claims

1. A visual angle control film, comprising a transparent structure layer, the transparent structure layer comprising a light-emitting plane and a light-entering micro-structure surface, **characterized in that**, a light control coating is arranged on a surface of the light-entering micro-structure surface, a recess of the light-entering micro-structure surface is filled with an absorption material, a reflection layer is arranged on an outer surface of the absorption material, an optical refractive index of the transparent structure layer is nH, an optical refractive index of the light control coating is nL, and the optical refractive index nH of the transparent structure layer and the optical refractive index nL of the light control coating satisfies: nH-nL>0.05.

2. The visual angle control film according to claim 1, **characterized in that**, a film substrate is arranged on the light-emitting plane of the transparent structure layer, and the transparent structure layer is applied and cured onto the film substrate.

3. The visual angle control film according to claim 2, **characterized in that**, a protective coating is arranged on the light-entering micro-structure surface of the transparent structure layer, and the protective coating is applied and cured onto the light control coating and the reflection layer.

4. The visual angle control film according to claim 3, **characterized in that**, an optical coating is arranged on an outer side of the protective coating, an optical refractive index of the protective coating is n6, and an optical refractive index of the optical coating is n7, and the optical refractive index n6 of the protective coating and the optical refractive index n7 of the optical coating satisfies: n6-n7>0.05.

5. The visual angle control film according to claim 4, **characterized in that**, the protective coating is covered with the optical coating by a coating process.

6. The visual angle control film according to claim 4, **characterized in that**, the light-entering micro-structure surface is formed by a plurality of structure units, which are equidistantly and parallelly arranged and have an isosceles trapezoid-shaped cross-section, and the recess is an isosceles trapezoid-shaped groove located between two adjacent said structure units.

7. The visual angle control film according to claim 6, **characterized in that**, a thickness of the light control coating is greater than or equal to 700 nm.

8. The visual angle control film according to claim 7, **characterized in that**, a thickness of the light control coating on two side surfaces of the isosceles trapezoid-shaped groove is the same, and a thickness of the light control coating on a bottom surface of the isosceles trapezoid-shaped groove is three times the thickness of the light control coating on the two side surfaces.

9. A preparation method for the visual angle control film according to claim 6, **characterized in that**, comprising the following steps:

Step 1, making a mold required for the transparent light structure, applying optical resin on a surface of the film substrate, and using the mold to form an optical entity by the film substrate and the transparent structure layer by a curing process;

Step 2, forming the light control coating on the surface of the transparent structure layer, controlling a thickness of the light control coating on two side surfaces of the isosceles trapezoid-shaped groove to be the same, and controlling a thickness of the light control coating on a bottom surface of the isosceles trapezoid-shaped groove to be three times the thickness of the light control coating on the two side surfaces;

Step 3, applying the absorption material onto the light control coating, filling the isosceles trapezoid-shaped groove with the absorption material, and curing the absorption material;

Step 4, covering a surface, formed by the absorption material and the light control coating, with a nanoscale-thickness seed layer capable of being decomposed under ultraviolet light, then irradiating the surface of the film substrate with ultraviolet light for exposure to produce a chemical reaction in an area, irradiated by the ultraviolet light, in the seed layer to remove the seed layer participating the reaction, and reserving the seed layer on a surface of the absorption material that is not irradiated by the ultraviolet light;

Step 5, plating the optical coating on a surface of the seed layer, and forming the reflection layer on the surface of the absorption material;

Step 6, applying optical resin onto a surface of the light control coating and a surface of the reflection layer, and forming the protective coating by the curing process; and

Step 7, covering a surface of the protective coating with the optical coating to form the complete high-efficiency visual angle control film.

10. The preparation method for the visual angle control film according to claim 9, **characterized in that**, comprising the following steps:

Step 1, making a mold required for the transparent light structure, applying optical resin onto a surface of the film substrate by a UV coating process, and using the mold to form the optical entity by the film substrate and the transparent structure layer by a UV curing process;

Step 2, plating the light control coating on the surface of the transparent structure layer by an optical coating process, controlling a thickness of the light control coating on two side surfaces of the isosceles trapezoid-shaped groove to be the same and greater than or equal to 700 nm, and controlling a thickness of the light control coating on a bottom surface of the isosceles trapezoid-shaped groove to be three times the thickness of the light control coating on the two side surfaces;

Step 3, applying the absorption material onto the light control coating, filling the isosceles trapezoid-shaped groove with the absorption material, and curing the absorption material by the UV curing process;

Step 4, covering a surface, formed by the absorption material and the light control coating, with a nanoscale-thickness seed layer made from an electrically conductive photoresist, then irradiating the surface of the film substrate with ultraviolet light for exposure to produce a chemical reaction in an area, irradiated by the ultraviolet light, in the seed layer, cleaning the seed layer with an photoresist etchant, and reserving the seed layer on a surface of the absorption material that is not irradiated by the ultraviolet light;

Step 5, plating the optical coating on a surface of the seed layer by an electroplating process, and forming the reflection layer on the surface of the absorption material;

Step 6, applying optical resin onto a surface of the light control coating and a surface of the reflection layer by the UV coating process, and forming the protective coating by the UV curing process; and

Step 7, covering a surface of the protective coating with the optical coating by a coating process to form the complete high-efficiency visual angle control film.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

FIG. 18

(a)

(b)

FIG. 19

(a)

(b)

FIG. 20

FIG. 21

FIG. 22

FIG. 23

FIG. 24

EP 4 703 776 A1

FIG. 25

FIG. 26

24

FIG. 27

FIG. 28

FIG. 29

Light transmittance

Visual angle

━━━ Lambertian light source

━ ━ Traditional visual angle control film

········· High-efficiency visual angle control film

## INTERNATIONAL SEARCH REPORT

| International application No. |
|---|
| **PCT/CN2024/081059** |

**A.    CLASSIFICATION OF SUBJECT MATTER**

G02B1/10(2015.01)i;  G02B5/00(2006.01)i;  G02F1/13(2006.01)i

According to International Patent Classification (IPC) or to both national classification and IPC

**B.    FIELDS SEARCHED**

Minimum documentation searched (classification system followed by classification symbols)

IPC:G02B、 G02F

Documentation searched other than minimum documentation to the extent that such documents are included in the fields searched

Electronic data base consulted during the international search (name of data base and, where practicable, search terms used)

CNABS, CNTXT, CNKI, VEN, ENTXT, USTXT, WPABS, ENTXTC: 可视, 视角, 防窥, 隐私, 折射率, visual, view???, peep-proof, anti-peeping, anti-spy, privacy, refractive 1d index

**C.    DOCUMENTS CONSIDERED TO BE RELEVANT**

| Category* | Citation of document, with indication, where appropriate, of the relevant passages | Relevant to claim No. |
|---|---|---|
| Y | US 2006104084 A1 (AMEMIYA HIROYUKI et al.) 18 May 2006 (2006-05-18) description, paragraphs 0030-0095, and figures 1-11 | 1-10 |
| Y | CN 1906505 A (DAI NIPPON PRINTING CO., LTD.) 31 January 2007 (2007-01-31) description, page 4, last paragraph to page 13, and figures 1-10 | 1-10 |
| Y | JP 2008233824 A (TOPPAN PRINTING CO., LTD.) 02 October 2008 (2008-10-02) description, paragraphs 0022-0061, and figures 1-4 | 1-10 |
| Y | JP 2003057416 A (DAINIPPON PRINTING CO., LTD.) 26 February 2003 (2003-02-26) description, paragraphs 0005-0066, and figures 1-10 | 1-10 |
| Y | JP 2003066206 A (DAINIPPON PRINTING CO., LTD.) 05 March 2003 (2003-03-05) description, paragraphs 0005-0109, and figures 1-13 | 1-10 |
| PX | CN 116594090 A (SUZHOU JINGZHI YINUO PHOTOELECTRIC TECHNOLOGY CO., LTD.) 15 August 2023 (2023-08-15) description, paragraphs 0065-0113, and figures 1-29 | 1-10 |

☑ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **06 June 2024** | **11 June 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2024/081059** |

### C.    DOCUMENTS CONSIDERED TO BE RELEVANT

| Category* | Citation of document, with indication, where appropriate, of the relevant passages | Relevant to claim No. |
| --- | --- | --- |
| A | CN 101821650 A (3M INNOVATIVE PROPERTIES COMPANY) 01 September 2010 (2010-09-01) description, paragraphs 0025-0114, and figures 1-9 | 1-10 |
| A | JP 2006184609 A (DAINIPPON PRINTING CO., LTD.) 13 July 2006 (2006-07-13) description, paragraphs 0023-0053, and figures 1-8 | 1-10 |

Form PCT/ISA/210 (second sheet) (July 2022)

## EP 4 703 776 A1

<table>
<tr><th colspan="3">INTERNATIONAL SEARCH REPORT<br>Information on patent family members</th><th colspan="2">International application No.<br><br>**PCT/CN2024/081059**</th></tr>
<tr><th colspan="2">Patent document<br>cited in search report</th><th>Publication date<br>(day/month/year)</th><th colspan="2">Patent family member(s)</th><th>Publication date<br>(day/month/year)</th></tr>
</table>

| Patent document cited in search report | | | Publication date (day/month/year) | Patent family member(s) | | | Publication date (day/month/year) |
|---|---|---|---|---|---|---|---|
| US | 2006104084 | A1 | 18 May 2006 | JP | 2006171701 | A | 29 June 2006 |
| CN | 1906505 | A | 31 January 2007 | None | | | |
| JP | 2008233824 | A | 02 October 2008 | None | | | |
| JP | 2003057416 | A | 26 February 2003 | None | | | |
| JP | 2003066206 | A | 05 March 2003 | JP | 5027969 | B2 | 19 September 2012 |
| CN | 116594090 | A | 15 August 2023 | None | | | |
| CN | 101821650 | A | 01 September 2010 | BRPI | 0816641 | A2 | 10 March 2015 |
| | | | | JP | 2011501219 | A | 06 January 2011 |
| | | | | US | 2010214506 | A1 | 26 August 2010 |
| | | | | US | 9335449 | B2 | 10 May 2016 |
| | | | | WO | 2009052052 | A1 | 23 April 2009 |
| | | | | US | 2016216420 | A1 | 28 July 2016 |
| | | | | US | 9804311 | B2 | 31 October 2017 |
| | | | | KR | 20100091977 | A | 19 August 2010 |
| | | | | KR | 101830969 | B1 | 21 February 2018 |
| | | | | TW | 200925686 | A | 16 June 2009 |
| | | | | TWI | 463201 | B | 01 December 2014 |
| | | | | EP | 2208096 | A1 | 21 July 2010 |
| | | | | EP | 2208096 | A4 | 27 July 2011 |
| | | | | EP | 2208096 | B1 | 27 November 2019 |
| JP | 2006184609 | A | 13 July 2006 | JP | 4121997 | B2 | 23 July 2008 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20190346615 A1
- JP 2017138410 A
- WO 2021130637 A1
- WO 2020121112 A1